Europäisches Patentamt

European Patent Office

Office européen des brevets

(11) Numéro de publication: **0 065 457
B1**

# (12) FASCICULE DE BREVET EUROPEEN

(45) Date de publication du fascicule du brevet:
05.12.84

(51) Int. Cl.³: **B 63 G 8/38**, G 02 B 23/08

(21) Numéro de dépôt: 82400836.1

(22) Date de dépôt: 06.05.82

(54) Installation périscopique à plusieurs têtes de visée pour sous-marins.

(30) Priorité: 15.05.81 FR 8109773

(43) Date de publication de la demande:
24.11.82 Bulletin 82/47

(45) Mention de la délivrance du brevet:
05.12.84 Bulletin 84/49

(84) Etats contractants désignés:
DE GB IT SE

(56) Documents cités:
DE - C - 50 996
FR - A - 495 996
FR - A - 1 427 037

(73) Titulaire: **SOCIETE D'APPLICATIONS GENERALES
D'ELECTRICITE ET DE MECANIQUE S A G E M, 6,
Avenue d'Iéna, F-75783 Paris Cedex 16 (FR)**

(72) Inventeur: **Barthelat, René, 11, rue Terray de Vindé,
F-96150 Taverny (FR)**
Inventeur: **Dore, Alain, 3, Impasse des Pincerais,
F-78700 Conflans Sainte Honorine (FR)**

(74) Mandataire: **Gorree, Jean-Michel et al, Cabinet
Plasseraud 84, rue d'Amsterdam, F-75009 Paris (FR)**

ACTORUM AG

## Description

La présente invention concerne des perfectionnements apportés aux installations périscopiques à plusieurs têtes de visée pour sous-marins. Une telle installation est connue du FR-A N° 495996.

L'invention a notamment pour but de prévoir un agencement qui donne mieux satisfaction dans la pratique que les agencements actuellement connus, qui permette une économie de place à l'intérieur du sous-marin, qui assure une plus grande sécurité, tant sur le plan de l'étanchéité que sur le plan de la résistance mécanique, pour la transmission des signaux entre une tête de visée extérieure au sous-marin et le poste d'observation (ou boîte oculaire) intérieur au sous-marin, ces perfectionnements s'accompagnant d'une simplification et donc d'une économie de construction, de mise en place et de maintenance, tout en procurant des qualités de fonctionnement au moins aussi bonnes que celles fournies par les matériels actuellement employés.

A ces fins, on prévoit, conformément à l'invention, que l'installation périscopique à plusieurs têtes de visée comprend:

— au moins deux mâts mobiles axialement et en rotation et portant respectivement des têtes de visée à leur extrémité supérieure, ces mâts et têtes de visée respectives étant en permanence situés à l'extérieur de la coque du sous-marin quelle que soit la position (hissée ou affalée) des mâts,

— au moins une structure de protection étanche entourant les mâts, cette structure étant reliée de façon étanche à la coque et étant agencée pour autoriser le coulissement étanche des mâts,

— au moins deux moyens de traversée étanche de la coque du sous-marin agencés pour assurer, à travers ladite coque, la transmission des signaux fournis par les têtes de visée respectives,

— au moins deux moyens de réception pour recevoir les signaux provenant des têtes de visée respectives, ces moyens de réception étant situés à l'intérieur de la coque du sous-marin et reliés respectivement auxdits moyens de traversée,

— un poste d'observation unique, situé à l'intérieur de la coque du sous-marin et apte à permettre l'observation des signaux reçus par les moyens de réception, et

— des moyens de commutation intercalés entre le poste d'observation et les moyens de réception et aptes à relier sélectivement le poste d'observation avec l'un des moyens de réception.

Un agencement conforme à l'invention permet de réaliser une installation périscopique beaucoup plus compacte que les installations à plusieurs périscopes complets utilisées jusqu'à présent.

Par ailleurs, le puits ou les puits, habituellement prévus pour recevoir les postes d'observation et les parties inférieures des mâts en position affalée, sont ici supprimés, ce qui permet d'accroître la résistance dans les parties basses du sous-marin et de disposer d'emplacements libres pour d'autres fins. En outre, l'utilisation d'un poste d'observation unique, qui peut éventuellement être conçu sous la forme d'un ensemble fixe associé à un appareil de compensation optique (ou dérotateur d'image) permettant de maintenir l'image dans un plan fixe pour l'observateur lorsque le mât avec lequel il coopère est en rotation, permet de procurer, là encore, un gain de place important à l'intérieur du sous-marin.

Il en résulte enfin, d'une façon générale, un gain de poids et une économie de matériels particulièrement sensibles.

Dans une installation périscopique conforme à l'invention, il est particulièrement intéressant d'avoir recours à une disposition selon laquelle au moins un des moyens de traversée est constitué par un hublot fixé de façon étanche dans la coque du sous-marin et constitué en un matériau transparent pour les signaux transmis par la tête de visée aux moyens de réception correspondants. Dans un mode de réalisation préféré, les signaux transmis par la tête de visée étant des signaux lumineux, le hublot est alors constitué en verre.

Aux avantages ci-dessus mentionnés, l'installation périscopique de l'invention allie alors une étanchéité parfaite de la coque du sous-marin à l'emplacement où les signaux traversent ladite coque via le hublot, puisqu'il n'est plus besoin des éléments de traversée mécanique étanche antérieurement utilisés pour le passage étanche du mât.

Il est possible de prévoir, à l'extérieur de la coque du sous-marin, une structure de protection unique protégeant tous les mâts et abritant les mécanismes nécessaires aux mouvements axiaux et de rotation des mâts.

Avantageusement, les moyens de commutation susmentionnés comprennent au moins un miroir de renvoi mobile.

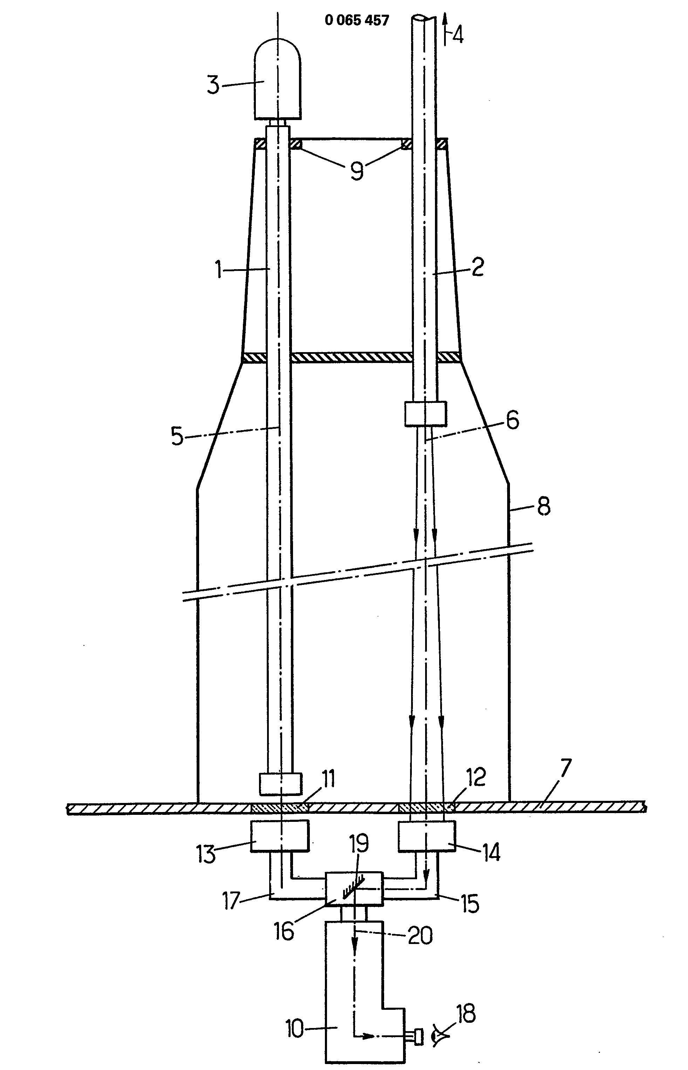

L'invention sera mieux comprise à la lecture de la description qui suit d'un mode de réalisation préféré donné uniquement à titre d'exemple non limitatif; dans cette description, on se réfère au dessin annexé sur lequel la figure unique représente, de façon très schématique, une installation périscopique à deux mâts et deux têtes de visée agencée conformément à l'invention.

L'installation conforme à l'invention comprend, d'une façon classique, deux mâts de périscope 1 et 2 portant, à leurs extrémités supérieures respectives, des têtes de visée 3 et 4. Les mâts 1 et 2 sont agencés pour pouvoir tourner autour de leurs axes respectifs 5 et 6, et pour pouvoir coulisser axialement entre une position non fonctionnelle ou position affalée, dans laquelle le périscope est escamoté, et une position fonctionnelle ou position hissée, dans laquelle la tête de visée est située au-dessus de la surface de l'eau. On n'a pas représenté sur la figure, par souci de simplification, les différents organes de commande d'entraînement et de guidage qui autorisent les mouvements des mâts.

On a supposé, dans l'exemple représenté, que chaque mât disposait de son propre mécanisme d'actionnement: de ce fait, à titre d'exemple, le mât 1 (à gauche sur la figure) est représenté en position affalée, tandis que le mât 2 (à droite sur la figure) est représenté en position hissée (la tête de visée correspondante 4, étant située en dehors du dessin, n'est pas visible).

Selon une disposition analogue à celle décrite dans la demande de brevet susmentionnée, les mâts 1 et 2 sont dans leur ensemble situés à l'extérieur de la coque épaisse et résistante 7 du sous-marin, et ils sont supportés par une structure fermée 8 fixée, de façon étanche, à la coque 7 du sous-marin. Les passages 9 des mâts 1 et 2, à la partie supérieure de la structure 8, sont eux aussi étanches, de telle manière que tous les accessoires nécessaires à l'actionnement des mâts puissent y être logés. On notera que la structure 8 est elle-même logée à l'intérieur du kiosque du sous-marin (non représenté) qui, en plongée, est rempli d'eau, et elle résiste donc à l'immersion.

Pour permettre l'observation des signaux, optiques ou autres, fournis par les têtes de visée 3 ou 4, un poste d'observation 10 est disposé à l'intérieur du sous-marin. Pour l'acheminement des signaux entre les têtes de visée et le poste d'observation, à travers la coque 7, on prévoit que la coque est munie de hublots 11, 12 fixés de façon étanche dans l'alignement des axes 5 et 6 des mâts 1 et 2 respectivement. Dans le cas représenté où les signaux fournis par les têtes de visée sont des signaux optiques lumineux, les hublots 11, 12 sont constitués en verre; mais, bien entendu, le matériau à retenir pour constituer les hublots 11 et 12 est fonction avant tout de la nature des signaux transmis, de telle manière que le hublot soit transparent pour lesdits signaux.

A l'intérieur de la coque du sous-marin, des appareils récepteurs de signaux 13, 14 sont placés en regard des hublots 11, 12, respectivement, et alignés sur les axes 5 et 6 des mâts 1 et 2 respectivement. Les appareils récepteurs 13, 14 sont agencés de façon appropriée pour recevoir et traiter éventuellement le type de signaux fournis par les têtes de visée 3, 4 respectivement. A titre d'exemple, et uniquement pour fixer les idées, la tête de visée 4 fournit une simple image lumineuse: l'appareil 14 est alors constitué essentiellement d'éléments optiques, notamment réflecteurs (non représentés) qui, par l'intermédiaire d'une liaison 15, renvoient les signaux lumineux en direction d'un appareil sélecteur 16 dont le rôle sera indiqué plus loin. Par contre, la tête de visée 3 peut être une tête de visée à rayonnements infrarouges ou bien une caméra de télévision; l'appareil récepteur 13 est alors apte à décoder les signaux transmis par la tête de visée 3 pour les transformer en image visible (par exemple récepteur de télévision) et les diriger, par la liaison 17, sur l'appareil sélecteur 16.

L'appareil sélecteur 16 est interposé entre les appareils récepteurs 13, 14 et le poste d'observation 10, et il a essentiellement pour fonction de diriger de façon sélective sur le poste d'observation les signaux fournis par l'un choisi des appareils d'observation, autrement dit d'assurer le fonctionnement effectif, aux yeux de l'observateur 18, de l'une des têtes de visée de l'installation.

Compte tenu de l'agencement des appareils récepteurs 13, 14 et du fait que les signaux à transmettre au poste d'observation 10 sont des signaux optiques lumineux, l'appareil sélecteur 16 peut avantageusement être constitué par un miroir incliné 19. Des moyens d'actionnement (par exemple bouton externe mécaniquement lié au miroir) à disposition de l'observateur (non représentés) permettent à celui-ci d'amener le miroir 19 dans l'une ou l'autre de ses positions et donc de sélectionner la tête de visée. Le faisceau lumineux (schématisé par le trajet en tirets 20) est alors repris dans le poste d'observation 10 pour présenter à l'observateur l'image fournie par la tête de visée (4 sur la figure).

On peut, bien entendu, prévoir tous agencements susceptibles de faciliter l'utilisation de l'installation, en particulier un asservissement mettant automatiquement le miroir 16 dans la position convenable pour coopérer avec celle des têtes de visée qui est en position hissée.

Comme déjà indiqué, chaque mât 1, 2 est supposé être équipé de moyens d'actionnement distincts. Il est donc possible de disposer les deux mâts simultanément en position hissée et, à l'aide de l'appareil sélecteur 16, l'observateur pourra passer, de façon instantanée, de l'une à l'autre des images fournies par les têtes de visée 3, 4.

En outre, pour gagner encore de la place à l'intérieur du sous-marin, on peut agencer le poste d'observation sous forme fixe (c'est-à-dire non tournant pour une observation panoramique). A cet effet, on associe au poste d'observation un appareil de compensation optique ou dérotateur d'image (non représenté) qui a pour fonction de maintenir l'image dans un plan fixe pour l'observateur lorsque le mât, entraînant sa tête de visée, tourne autour de son axe.

Bien entendu, le poste d'observation n'est pas limité à l'observation visuelle par un observateur; il comporte également tous les éléments de traitement d'image, tels qu'appareil photographique, caméra de télévision, tube de visualisation, etc., avec l'équipement électronique associé, tous organes qui ne sont prévus qu'en un seul exemplaire pour coopérer sélectivement avec l'une ou l'autre des têtes de visée.

L'installation périscopique conforme à l'invention permet donc d'obtenir une réduction notable de matériels embarqués et donc une diminution du poids et du coût du sous-marin; en outre, il est possible de dégager à l'intérieur du sous-marin un espace libre important, ce qui est appréciable pour loger d'autres équipements ou pour concevoir des sous-marins de plus faible encombrement.

Comme il va de soi et comme il résulte d'ailleurs déjà de ce qui précède, l'invention ne se limite nullement à ceux de ses modes d'application et de réalisation qui ont été plus spécialement envisagés.

En particulier, l'installation périscopique de l'invention peut comporter un nombre de mâts et de têtes de visée supérieur au nombre de deux, lequel n'a été envisagé ici qu'à titre d'exemple.

## Revendications

1. Installation périscopique à plusieurs têtes de visée pour sous-marin, caractérisée en ce qu'elle comprend:
— au moins deux mâts (1, 2) mobiles axialement et en rotation et portant respectivement des têtes de visée (3, 4) à leur extrémité supérieure, ces mâts et têtes de visée respectives étant en permanence situés à l'extérieur de la coque (7) du sous-marin, quelle que soit la position (hissée ou affalée) des mâts,
— au moins une structure de protection étanche (8) entourant les mâts, cette structure étant reliée de façon étanche à la coque et étant agencée pour autoriser le coulissement étanche des mâts,
— au moins deux moyens (11, 12) de traversée étanche de la coque du sous-marin agencés pour assurer, à travers ladite coque, la transmission des signaux fournis par les têtes de visée respectives,
— au moins deux moyens de réception (13, 14) pour recevoir les signaux provenant des têtes de visée respectives, ces moyens de réception étant situés à l'intérieur de la coque du sous-marin et reliés respectivement auxdits moyens de traversée,
— un poste d'observation unique (10), situé à l'intérieur de la coque du sous-marin et apte à permettre l'observation des signaux reçus par les moyens de réception, et
— des moyens de commutation (16) intercalés entre le poste d'observation et les moyens de réception et aptes à relier sélectivement le poste d'observation avec l'un des moyens de réception.

2. Installation périscopique selon la revendication 1, caractérisée en ce qu'au moins un des moyens (11, 12) de traversée est constitué par un hublot fixé de façon étanche dans la coque (7) du sous-marin et constitué en un matériau transparent pour les signaux transmis par la tête de visée (3, 4) aux moyens de réception correspondants.

3. Installation périscopique selon la revendication 2, caractérisée en ce que les signaux transmis par la tête de visée (3, 4) sont des signaux lumineux et en ce que le hublot est constitué en verre.

4. Installation périscopique selon l'une quelconque des revendications 1 à 3, caractérisée en ce qu'il est prévu une structure (8) de protection unique pour protéger tous les mâts (1, 2).

5. Installation périscopique selon l'une quelconque des revendications 1 à 4, caractérisée en ce que chaque mât (1, 2) est déplaçable axialement de façon individuelle.

6. Installation périscopique selon l'une quelconque des revendications 1 à 5, caractérisée en ce que le poste d'observation (10) est fixe et en ce qu'il est prévu un appareil de traitement de l'image (dérotateur d'image) associé au poste d'observation et agencé pour maintenir l'image dans un plan fixe lorsque le mât (1, 2) et la tête de visée (3, 4) correspondante tournent.

7. Installation périscopique selon l'une quelconque des revendications 1 à 6, caractérisée en ce que les moyens de commutation (16) comprennent au moins un miroir de renvoi mobile (19).

## Patentansprüche

1. Periskopanlage mit mehreren Beobachtungsköpfen für ein Unterseeboot, gekennzeichnet durch
— mindestens zwei axial und drehbar bewegliche Masten (1, 2), die an ihrem oberen Ende jeweils einen Beobachtungskopf (3, 4) tragen, wobei die Masten und jeweiligen Beobachtungsköpfe ständig ausserhalb des Rumpfes (7) des Unterseeboots angeordnet sind, unabhängig von der Stellung der Masten (ausgefahren oder eingezogen),
— mindestens eine dichte die Masten umgebende Schutzstruktur, die dicht mit dem Rumpf verbunden und derart ausgebildet ist, dass sie das dichte Gleiten der Masten ermöglicht,
— mindestens zwei dicht Durchführungseinrichtungen (11, 12) durch den Rumpf des Unterseeboots zur Gewährleistung des Durchlassens der von den entsprechenden Beobachtungsköpfen gelieferten Signale durch den Rumpf,
— mindestens zwei Empfangseinrichtungen (13, 14) zum Empfang der von den jeweiligen Beobachtungsköpfen stammenden Signale, wobei diese Empfangseinrichtungen im Inneren des Rumpfes des Unterseeboots angeordnet und mit den jeweiligen Durchführungseinrichtungen verbunden sind,
— einen einzigen Beobachtungsposten (10), der im Innern des Rumpfes des Unterseeboots angeordnet und in der Lage ist, die Beobachtung der von den Empfangseinrichtungen aufgenommenen Signale zu ermöglichen, und
— zwischen den Beobachtungsposten und die Empfangseinrichtungen zwischengeschaltete Schalteinrichtungen (16), die in der Lage sind, selektiv den Beobachtungsposten mit einer der Empfangseinrichtungen zu verbinden.

2. Periskopanlage nach Anspruch 1, dadurch gekennzeichnet, dass mindestens eine der Durchführungseinrichtungen (11, 12) von einem Bullauge gebildet ist, das dicht in dem Rumpf (7) des Unterseeboots befestigt und aus einem Material gebildet ist, das für die von dem Beobachtungskopf (3, 4) zu den entsprechenden Durchführungseinrichtungen übermittelten Signale durchlässig ist.

3. Periskopanlage nach Anspruch 2, dadurch gekennzeichnet, dass die von dem Beobachtungskopf (3, 4) übermittelten Signale Lichtsignale sind und das Bullauge aus Glas gebildet ist.

4. Periskopanlage nach einem der Ansprüche 1 bis 3, dadurch gekennzeichnet, dass eine einzige Schutzstruktur (8) zum Schutz aller Masten (1, 2) vorgesehen ist.

5. Periskopanlage nach einem der Ansprüche 1 bis 4, dadurch gekennzeichnet, dass jeder Mast (1, 2) in axialer Richtung einzeln verlagerbar ist.

6. Periskopanlage nach einem der Ansprüche 1 bis 5, dadurch gekennzeichnet, dass der Beobachtungsposten (10) fest ist und dass eine dem Beobachtungsposten zugeordnete Bildbearbeitungsvorrichtung (Bildentdreher) vorgesehen ist, die derart ausgebildet ist, dass sie das Bild in einer festen Ebene hält, während der Mast (1, 2) und der entsprechende Beobachtungskopf (3, 4) rotieren.

7. Periskopanlage nach einem der Ansprüche 1 bis 6, dadurch gekennzeichnet, dass die Schalteinrichtungen (16) mindestens einen bewegbaren Umlenkspiegel (19) aufweisen.

## Claims

1. A periscopic installation with several sighting heads for submarines, characterized in that it comprises:
— at least two axially and rotatably movable masts (1, 2) carrying respectively sighting heads (3, 4) at their upper end, said masts and respective sighting heads being permanently situated outside the hull (7) of the submarine whatever the position (raised or lowered) of the masts,
— at least one sealed protection structure (8) surrounding the masts, said structure being sealingly connected to the hull and being arranged so as to allow sealed sliding of the masts,
— at least two through-means (11, 12) passing sealingly through the hull of the submarine and adapted so as to provide, through said hull, the transmission of signals supplied by the respective sighting heads,
— at least two receiving means (13, 14) for receiving the signals from the respective sighting heads, said receiving means being situated inside the hull of the submarine and being connected respectively to said through-means,
— a single observation post (10) situated inside the hull of the submarine and adapted to allow observations of the signals received by the receiving means, and
— switching means (16) inserted between the observation post and the receiving means for selectively connecting the observation post with one of the receiving means.

2. The periscopic installation according to claim 1, characterized in that at least one of the through-means (11, 12) is a port-hole sealingly fixed in the hull (7) of the submarine and made from a material transparent for the signals transmitted by the sighting head (3, 4) to the corresponding receiving means.

3. The periscopic installation according to claim 2, characterized in that the signals transmitted by the sighting head (3, 4) are light signals and in that the port-hole is made of glass.

4. The periscopic installation according to any one of claims 1 to 3, characterized in that a single protection structure (8) is provided for protecting all the masts (1, 2).

5. The periscopic installation according to any one of claims 1 to 4, characterized in that each mast (1, 2) is individually axially movable.

6. The periscopic installation according to any one of claims 1 to 5, characterized in that the observation post (10) is fixed and that an image processing apparatus (image derotator) is provided associated with the observation post and adapted to maintain the image in a fixed plane when the mast (1, 2) and the corresponding sighting head (3, 4) rotate.

7. The periscopic installation according to any one of claims 1 to 6, characterized in that the switching means (16) comprise at least one movable reflecting mirror (19).

0 065 457